# FASCICULE DE BREVET EUROPEEN

(11) **EP 2 469 355 B1**
(45) Date de publication et mention de la délivrance du brevet: **25.09.2013**
(21) Numéro de dépôt: 11190968.5
(22) Date de dépôt: 28.11.2011
(51) Int. Cl.: G04B 13/02, G04B 17/32, G04B 17/34, B81C 3/00, G04B 15/14, G04D 1/00, G04D 3/04

(54) **Assemblage d'une pièce ne comportant pas de domaine plastique**
Zusammenbau eines Teils, das keinen Plastikbereich enthält
Assembly of a part not comprising a plastic range

(30) Priorité: 22.12.2010 EP 10196585
(43) Date de publication de la demande: 27.06.2012
(73) Titulaire: Nivarox-FAR S.A., 2400 Le Locle (CH)
(72) Inventeur: Verardo, Marco, 2336 Les Bois (CH); Cusin, Pierre, 1423 Villars-Burquin (CH); Queval, Arthur, 1095 Lutry (CH)
(74) Mandataire: Couillard, Yann Luc Raymond

(56) Documents cités:
- EP-A1- 2 107 433
- CH-A2- 699 680
- FR-A- 1 427 115

## Description

### Domaine de l'invention

L'invention se rapporte à un assemblage d'une pièce dont le matériau ne comporte pas de domaine plastique avec un organe comportant un autre type de matériau.

### Arrière plan de l'invention

Les assemblages actuels comportant une pièce à base de silicium sont généralement solidarisés par collage. Une telle opération nécessite une extrême finesse d'application ce qui la rend coûteuse.

Le document EP 2 107 433 divulgue une première pièce faite à base silicium qui est assemblée sur une pièce intermédiaire métallique le tout étant ensuite assemblé sur un axe en métal. Toutefois, les formes de réalisation proposées dans ce document ne sont pas satisfaisantes et, soit, entraînent le bris de la pièce à base de silicium lors de son assemblage, soit, solidarisent insuffisamment les pièces entre elles.

En effet, dans ce document, une extrémité de la pièce intermédiaire est repliée sur la partie en silicium en générant des contraintes uniquement axiales ce qui a pour conséquence de briser la pièce en silicium. De plus, le document propose l'utilisation de facettage ce qui entraîne une répartition non uniforme de la contrainte sur le silicium causant également le bris de la pièce en silicium.

Le document CH 699 680 divulgue l'assemblage un mobile sur un axe à l'aide d'une pièce intermédiaire en plastique.

### Résumé de l'invention

Le but de la présente invention est de pallier tout ou partie les inconvénients cités précédemment en proposant un assemblage sans colle capable de solidariser une pièce dont le matériau ne comporte pas de domaine plastique avec un organe comportant un matériau ductile comme, par exemple, un métal ou un alliage métallique.

A cet effet, l'invention se rapporte à un procédé d'assemblage d'un organe s'étendant axialement en un premier matériau dans une pièce en un deuxième matériau ne comprenant pas de domaine plastique, ledit procédé comportant les étapes suivantes :
a) former la pièce avec une ouverture ;
b) introduire sans contrainte, dans l'ouverture, une partie évasée radialement de l'organe;
c) déformer élastiquement et plastiquement la partie évasée dudit organe dans l'ouverture par rapprochement axial de deux outils respectivement au niveau des parties supérieure et inférieure de ladite partie évasée afin que ladite partie évasée exerce une contrainte radiale contre la paroi de la pièce entourant l'ouverture en sollicitant la déformation élastique de la pièce pour solidariser l'assemblage de manière non destructive pour ladite pièce.

Ce procédé permet avantageusement de solidariser radialement l'organe et la pièce sans qu'aucun effort axial ne soit appliqué sur la pièce. En effet, de manière avantageuse selon l'invention, seule une déformation élastique uniforme et radiale est appliquée sur la pièce.

De plus, cette configuration permet avantageusement de solidariser l'ensemble pièce - organe sans collage avec un organe habituel à la précision maîtrisée tout en garantissant que la pièce ne subisse pas d'efforts destructifs même si elle est formée, par exemple, à partir de silicium monocristallin.

Enfin, un tel procédé permet de solidariser l'ensemble pièce - organe en s'adaptant aux dispersions de fabrication des différents constituants.

Conformément à d'autres caractéristiques avantageuses de l'invention :
- la paroi externe de la partie évasée dudit organe dans l'ouverture est sensiblement de forme correspondante à l'ouverture de la pièce afin d'exercer une contrainte radiale sensiblement uniforme sur la paroi de la pièce entourant l'ouverture ;
- l'ouverture de la pièce est circulaire ;
- la paroi de la pièce entourant l'ouverture comporte des cannelures qui, lors de l'étape c), vont former des micro-rainures sur la surface externe de la partie évasée afin d'éviter les déplacements relatifs entre les éléments dudit assemblage ;
- l'ouverture de la pièce est asymétrique afin d'éviter les déplacements relatifs entre les éléments dudit assemblage ;
- lors de l'étape b), la différence entre la section de l'ouverture et la section externe de la partie évasée dudit organe dans l'ouverture est d'environ 10 µm ;
- lors de l'étape c), la déformation exerce un serrage compris entre 8 et 20 µm;
- lors des étapes b) et c), la partie évasée de l'organe dans l'ouverture est maintenue dans l'ouverture à l'aide d'un des deux outils ;
- lors de l'étape b), la partie évasée dudit organe dans l'ouverture comporte un évidement conique afin, lors de l'étape c), de faciliter l'orientation radiale (B) de la contrainte induite par la déformation de ladite partie évasée ;
- le deuxième matériau est formé à base de silicium ;
- le premier matériau est formé à base de métal ou d'alliage métallique ;
- la pièce peut être, par exemple, un mobile d'horlogerie, une ancre d'horlogerie, un spiral d'horlogerie, un résonateur ou encore un MEMS.

### Description sommaire des dessins

D'autres particularités et avantages ressortiront clairement de la description qui en est faite ci-après, à titre indicatif et nullement limitatif, en référence aux dessins annexés, dans lesquels :
- les figures 1 et 2 sont des représentations schématiques d'étapes successives du procédé d'assemblage selon l'invention ;
- les figures 3 et 4 sont des représentations en coupe vues de face ou en perspective de l'organe selon l'invention ;
- les figures 5 et 6 sont des représentations d'étapes alternatives du procédé d'assemblage selon l'invention ;
- les figures 7 à 10 sont des représentations de variantes de l'organe selon l'invention ;
la figure 11 est une représentation d'une alternative d'ouverture pour la pièce en matériau fragile.

### Description détaillée des modes de réalisation préférés

Comme expliqué ci-dessus, l'invention se rapporte à un assemblage et son procédé destinés à solidariser un matériau fragile, c'est-à-dire ne comportant pas de domaine plastique comme un matériau à base de silicium monocristallin, avec un matériau ductile comme un métal ou un alliage métallique.

Cet assemblage a été imaginé pour des applications dans le domaine horloger. Toutefois, d'autres domaines peuvent parfaitement être imaginés comme notamment l'aéronautique, la bijouterie, l'automobile ou les arts de la table.

Dans le domaine horloger, cet assemblage est rendu nécessaire par la part croissante que tiennent les matériaux fragiles comme ceux à base de silicium, de quartz, de corindon ou plus généralement de céramique. On peut, à titre d'exemple, envisager de former le spiral, le balancier, l'ancre, les ponts ou même les mobiles comme les roues d'échappement totalement ou partiellement à base de matériaux fragiles.

Toutefois, le fait de toujours pouvoir utiliser des axes habituels en acier dont la fabrication est maîtrisée, est une contrainte qui est difficile à concilier avec l'utilisation de pièces ne comportant pas de domaine plastique. En effet, lors de tests effectués, le chassage d'un axe en acier est impossible et brise systématiquement les pièces fragiles, c'est-à-dire ne comportant pas de domaine plastique. Par exemple, il est apparu que le cisaillement généré par l'entrée de l'axe métallique dans l'ouverture d'une pièce en silicium brise systématique cette dernière.

Dans le domaine de l'horlogerie, un préjugé technique tend ainsi à considérer qu'il ne faut pas dépasser une contrainte comprise entre 300 et 450 MPa sur une pièce en silicium sous peine de briser cette dernière. Cette échelle de valeur est estimée théoriquement à partir du module d'Young caractérisant le domaine élastique du silicium.

Par conséquent, pour les cas où les contraintes estimées dépassent cette plage entre 300 et 450 MPa, des moyens de déformation élastique formés par des ajourages traversants dans le silicium ont alors été développés comme ceux divulgués dans les documents EP 1 445 670, WO 2006/122873 et WO 2007/099068.

Lors de tests supplémentaires effectués en déformant une partie évasée radialement et en augmentant au fur et à mesure la contrainte appliquée sur la partie en silicium, il est apparu, de manière étonnante, que la pièce en silicium pouvait supporter en fait une contrainte bien supérieure avant qu'une amorce de rupture soit détectée. Ainsi, de manière inattendue, les tests ont été prolongés jusqu'à une plage de contrainte comprise entre 1,5 et 2 GPa sans rupture, c'est-à-dire bien au-delà du préjugé technique s'étendant entre 300 à 450 MPa. Par conséquent, de manière étendue, les matériaux fragiles tels que le silicium, le quartz, le corindon ou plus généralement la céramique ne suivent pas nécessairement les modèles statistiques de pièces fragiles habituellement utilisés.

C'est pourquoi, l'invention se rapporte à un assemblage entre un organe en un premier matériau, par exemple ductile comme l'acier, dans l'ouverture d'une pièce en un deuxième matériau ne comportant pas de domaine plastique, comme un matériau à base de silicium.

Selon l'invention, ledit organe comporte une partie évasée radialement et déformée élastiquement et plastiquement qui serre radialement la paroi de ladite pièce entourant l'ouverture afin de contraindre élastiquement la pièce pour solidariser l'assemblage de manière non destructive pour ladite pièce.

De plus, de manière préférée, la paroi externe de la partie évasée radialement de l'organe présente dans l'ouverture est sensiblement de forme correspondante à l'ouverture de la pièce afin d'exercer une contrainte radiale sensiblement uniforme sur la paroi de la pièce entourant ladite ouverture. En effet, lors des recherches effectuées, il est apparu préférable que la partie évasée de l'organe présente dans l'ouverture répartisse de manière uniforme les contraintes radiales induites par sa déformation sur la paroi de la pièce entourant l'ouverture.

Par conséquent, si l'ouverture dans la pièce fragile est circulaire, il est préférable que la paroi externe de la partie évasée de l'organe présente dans l'ouverture soit en forme sensiblement de cylindre continu, c'est-à-dire sans fente radiale ou ajourage axial, pour éviter les contraintes localisées sur une faible surface de la paroi de la pièce entourant l'ouverture qui sont propres à briser la matière fragile.

Bien entendu, la forme de l'ouverture dans la pièce fragile peut différer en étant, par exemple, asymétrique afin d'éviter les déplacements relatifs entre les éléments de l'assemblage. Ainsi, selon une première alternative, une telle ouverture asymétrique peut ainsi être, par exemple, sensiblement elliptique.

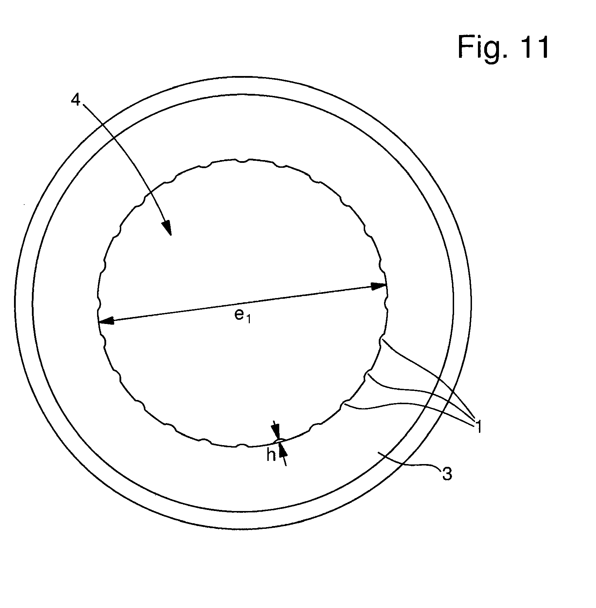

Selon une autre alternative destinée à éviter les déplacements relatifs, comme visible à la figure 11, la paroi de la pièce 3 peut être munie de cannelures 1 faisant saillie dans l'ouverture 4. Préférentiellement, les cannelures 1 courent sur toute l'épaisseur de la pièce 3 et comportent une surface externe bombée de hauteur maximale h. Bien entendu, les cannelures 1 peuvent être sensiblement rectilignes ou non.

On comprend donc que ces cannelures 1 de hauteur h beaucoup plus petites par rapport au diamètre e₁ de l'ouverture 4 vont former des micro-rainures sur la surface externe de la partie évasée lorsqu'elle sera déformée afin de former des liaisons de type tenon - mortaise permettant de solidariser en rotation la paroi de l'ouverture 4 et la surface externe de la partie évasée et, incidemment, de l'organe 5.

Par conséquent, la partie évasée radialement de l'organe présente dans l'ouverture avec une forme correspondante à l'ouverture peut s'interpréter, si la section de l'ouverture est circulaire, comme un disque plein dont la paroi externe est continue, c'est-à-dire sans rainure ou plus généralement de discontinuité de matière. La forme correspondante de la partie évasée de l'organe présente dans l'ouverture permet donc, par déformation élastique et plastique, de générer uniquement une contrainte radiale sensiblement uniforme sur une surface maximisée de la paroi de la pièce autour de l'ouverture.

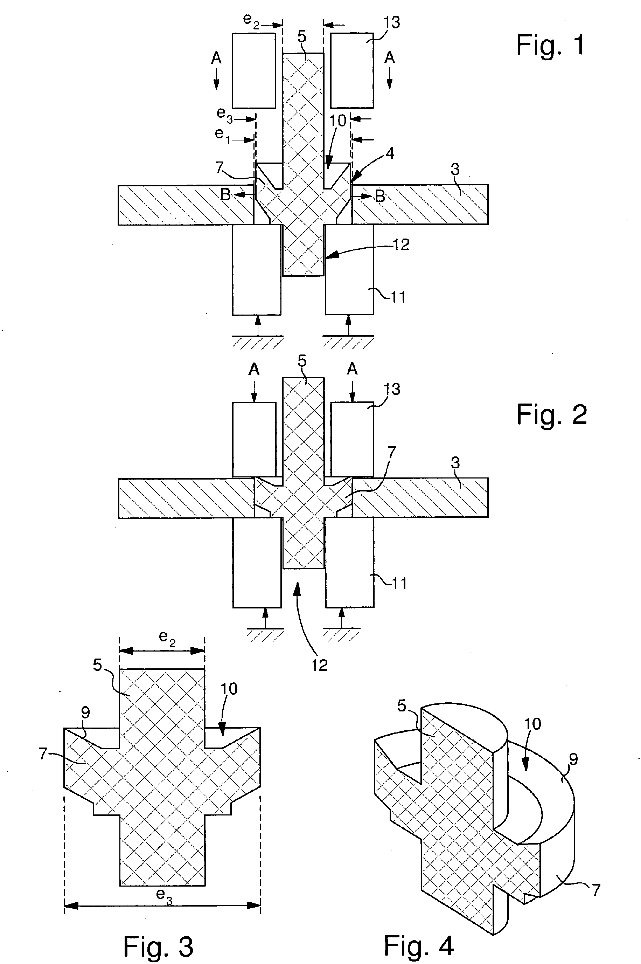

L'assemblage selon l'invention sera mieux compris en relation avec les figures 1 à 10 présentant des exemples d'assemblage.

Aux figures 1 à 4, on peut voir un premier mode de réalisation selon l'invention. Une première étape consiste ainsi à former la pièce 3 en un matériau n'ayant pas de domaine plastique avec une ouverture 4 circulaire. Comme visible à la figure 1, l'ouverture 4 comporte une section e₁, qui, préférentiellement, est comprise entre 0,5 et 2 mm et, éventuellement, les cannelures 1 de la figure 11 faisant saillies dans l'ouverture 4 comportent une hauteur comprise entre 5 et 25 µm.

Une telle étape peut être réalisée par gravage sous forme sèche ou humide comme, par exemple, un gravage ionique réactif profond (également connu sous l'abréviation anglaise « DRIE »).

De plus, dans une deuxième étape, le procédé consiste à former l'organe, un axe de pivotement 5 dans l'exemple des figures 1 et 2, en un deuxième matériau avec une section principale e₂ et une partie évasée radialement 7 destinée à être déformée avec une section maximale e₃. La partie évasée 7 peut comporter une épaisseur comprise entre 100 et 600 µm. Comme expliqué ci-dessus, la deuxième étape peut être réalisée selon les processus habituels de fabrication d'axes. L'organe 5 est préférentiellement métallique et peut, par exemple, être formé en acier.

Bien entendu, les deux premières étapes n'ont pas de consécutivité à respecter et peuvent même être réalisées en même temps.

Dans une troisième étape, la partie évasée radialement 7 est introduite sans contact dans l'ouverture 4. Cela signifie comme visible à la figure 1 que la section e₁ de l'ouverture 4 est plus grande ou égale à la section externe e₃ de la partie évasée 7 de l'organe 5.

De manière préférée, la différence entre la section e₁ de l'ouverture 4, ou éventuellement les cannelures 1, et la section externe e₃ de la partie évasée 7 est d'environ 10 µm, c'est-à-dire un insterstice d'environ 5 µm qui sépare la pièce 3 par rapport à la partie évasée 7 de l'organe 5.

De plus, préférentiellement selon l'invention, la partie évasée radialement 7 et, incidemment, l'organe 5, est maintenue dans l'ouverture 4 à l'aide d'un 11 des outils 11, 13 utilisés pour l'étape de déformation. Enfin, de manière préférée, l'outil 11 comporte un évidement 12 destiné à recevoir une extrémité de l'organe 5.

Enfin, le procédé comporte une quatrième étape consistant à déformer élastiquement et plastiquement la partie évasée radialement 7 de l'organe 5 par rapprochement des outils 11, 13 selon la direction axiale A afin d'exercer une contrainte radiale B contre la paroi de la pièce entourant l'ouverture 4 en sollicitant la déformation élastique de la pièce 3.

En effet, de manière inattendue, il n'est pas nécessaire de prévoir d'ajourages traversant l'épaisseur de la pièce 3 autour de l'ouverture 4 comme ceux divulgués dans les documents EP 1 445 670, WO 2006/122873 et WO 2007/099068 pour éviter le bris de la pièce 3. Ainsi, la pièce 3 va se déformer élastiquement même sous forte contrainte, c'est-à-dire supérieur à 450 MPa pour le silicium, sans amorce de rupture.

Ainsi, comme visible à la figure 2, le pressage de la partie évasée radialement 7 au niveau de ses parties supérieure et inférieure respectivement par l'outil 11 et 13 selon la direction axiale A va induire une déformation élastique et plastique de la partie évasée 7 de manière exclusivement radiale selon la direction B, c'est-à-dire vers la pièce 3. Une fois la contrainte des outils 11, 13 relâchée, la pièce 3 exerce un retour élastique propre à définitivement solidariser l'ensemble organe 5 - pièce 3 via la partie évasée 7.

De manière préférée selon l'invention, la déformation est paramétrée afin que le serrage soit supérieur aux interstices entre la partie évasée 7 non déformée et la paroi de l'ouverture 4. Préférentiellement, le serrage est compris entre 8 et 20 µm.

Par conséquent, il est voulu que la déformation élastique et plastique de la partie évasée radialement 7 exerce la déformation élastique de la pièce 3 autour de l'ouverture 4 afin de solidariser ensemble l'organe 5 et donc sa partie évasée 7 déformée, avec la pièce 3 comme visible à la figure 2. Comme illustré à la figure 2, il peut également arriver que l'extrémité de la partie évasée 7, lors de la déformation, se rabattre superficiellement au-dessus de la pièce 3 sans toutefois exercer une quelconque contrainte axiale sur la pièce 3. Enfin, il est à noter que ce mode de réalisation autorise notamment un centrage automatique de l'organe 5 par rapport à la pièce 3.

Avantageusement selon l'invention, aucun effort axial (par définition risquant d'être destructif) n'est appliqué sur la pièce 3 pendant le procédé. Seule une déformation élastique radiale maitrisée en fonction de la contrainte programmée des outils 11, 13, est appliquée sur la pièce 3. Il est également à noter que l'utilisation de la partie évasée radialement 7 dont la paroi externe est de forme sensiblement correspondante à l'ouverture 4 permet, lors de la déformation radiale B de la partie évasée 7, d'exercer une contrainte uniforme sur la paroi de la pièce entourant l'ouverture 4 afin d'éviter tout bris de la pièce 3 en matériau fragile et s'adapter aux dispersions de fabrication des différents éléments comme par exemple les cannelures 1.

Comme visible aux figures 3 et 4, préférentiellement, la partie évasée radialement 7 comporte un évidement 10 conique afin de, lors de l'étape de déformation, faciliter l'orientation radiale B de la contrainte induite par la déformation de la partie évasée 7 mais également rendre ladite contrainte progressive. En effet, la pente 9 formant l'évidement conique 10 induit une surface de contact initiale contre l'outil 13 réduite à un cercle en obligeant la paroi externe de la partie évasée 7 à se déformer radialement avec un serrage progressif contre la paroi de la pièce 3 entourant l'ouverture 4.

Dans l'exemple illustré aux figures 3 et 4, on voit que l'évidement conique 10 forme un méplat entre la pente 9 et le retour à l'épaisseur e₂ de l'organe 5. Cette caractéristique, c'est-à-dire que l'évidement conique 10 communique avec l'épaisseur e₂ de l'organe 5, comme montrée ci-dessous n'est toutefois pas essentielle et l'évidement 10 ainsi que sa pente 9 peuvent être de formes et de dimensions différentes.

Bien entendu, la présente invention ne se limite pas à l'exemple illustré mais est susceptible de diverses variantes et modifications qui apparaîtront à l'homme de l'art. En particulier, un blocage axial de la pièce 3 peut être apporté dans une alternative du premier mode de réalisation.

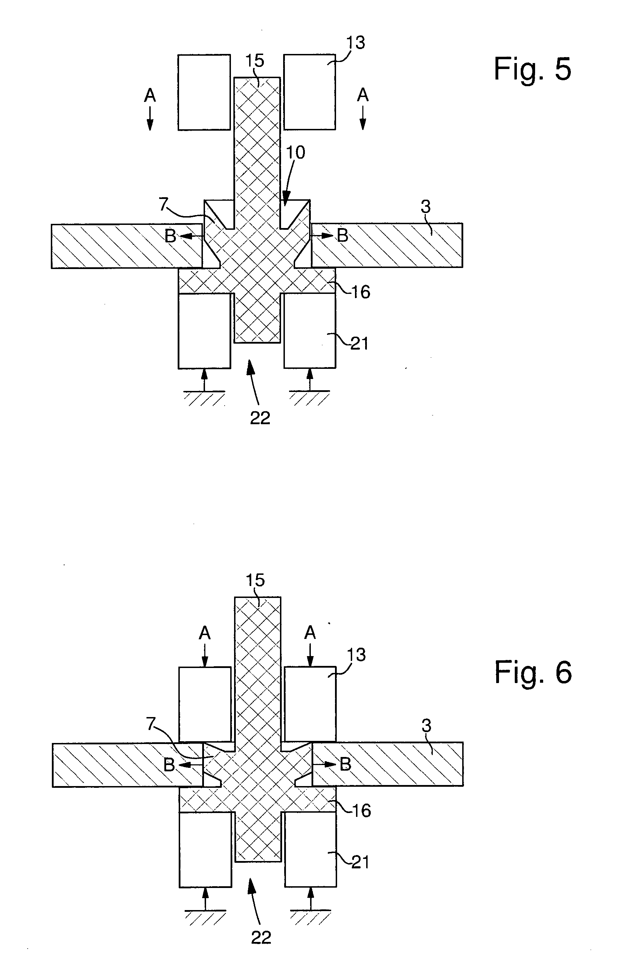

A titre d'exemple, les figures 5 et 6 présentent un deuxième mode de réalisation du procédé. Ainsi, les figures 5 et 6 présentent une alternative dans laquelle l'organe 15 est sensiblement différent de l'organe 5 en présentant une collerette 16. A ce titre, l'outil 21 en partie inférieure est modifié et comporte un trou traversant 22 de section au moins égale ou supérieure à celle de l'organe 15.

On comprend donc que l'organe 5 n'est plus porté par la partie évasée radialement 7 mais est porté par la collerette 16 ainsi, éventuellement, que la pièce 3. De plus, la déformation de la partie évasée 7 au niveau de sa partie inférieure n'est plus réalisée directement par l'outil 21 mais par l'intermédiaire de la collerette 16 sans que le procédé ne perde de son intérêt. Ainsi, la pièce 3 est sous contrainte élastique au niveau de la partie évasée 7 et bloquée contre la collerette 16 de l'organe 15.

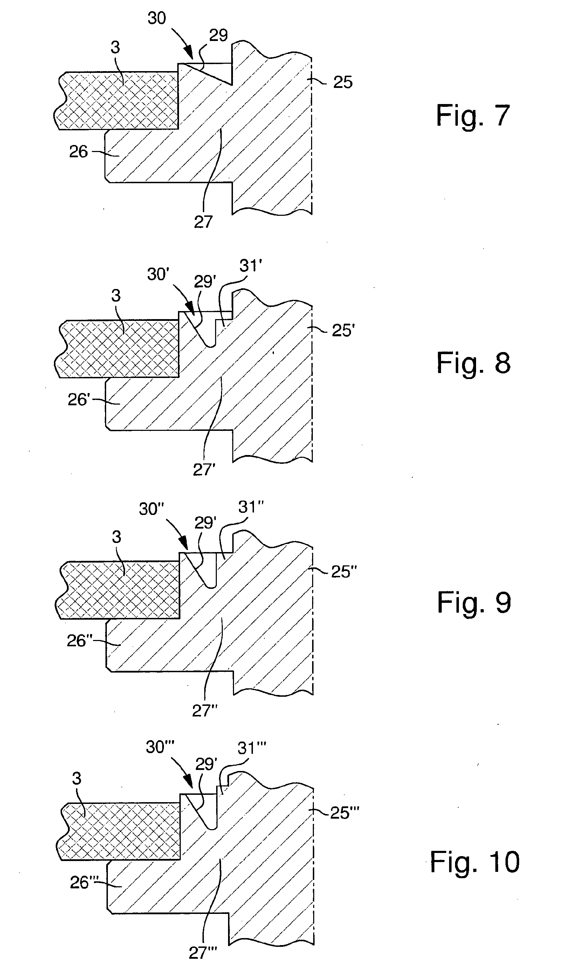

A titre d'exemple, les figures 7 à 10 présentent un troisième mode de réalisation du procédé. Ainsi, les figures 7 à 10 présentent une alternative dans laquelle la partie évasée radialement 27, 27', 27", 27"' est sensiblement différente de la partie évasée 7 du premier mode de réalisation en présentant une collerette intégrée 26, 26', 26", 26"'. Par conséquent, le troisième mode de réalisation utilise les mêmes outils 21, 13 que le deuxième mode de réalisation. Ainsi, la pièce 3 sous contrainte élastique au niveau de la partie évasée 27, 27', 27", 27"' et bloquée contre la collerette 26, 26', 26", 26"'.

Dans une première variante illustrée à la figure 7, la partie évasée 27 comporte un évidement conique 30 dont la pente 29 finit directement selon l'épaisseur e₂ de l'organe 25, c'est-à-dire sans méplat.

Il est également possible, dans une deuxième variante, que la partie évasée 27', 27", 27"' comporte un évidement conique 30', 30", 30"' dont la pente 29', 29", 29"' ne finit pas selon l'épaisseur e₂ de l'organe 25', 25", 25"' mais en est séparé par un anneau 31', 31", 31"'. La hauteur de l'anneau peut ainsi être inférieure 31' à celle de l'extrémité de la pente 29', être égale 31" à celle de l'extrémité de la pente 29" ou encore être supérieure 31'" à celle l'extrémité de la pente 29"'. Bien entendu, pour cette deuxième variante, l'outil 13 fait vis-à-vis, lors de l'étape de déformation, à la pente 29', 29", 29"' sans entrer en contact avec l'anneau 31', 31 ", 31 "'.

Les modes de réalisation présentés ci-dessus sont susceptibles d'être combinés entre eux suivant les applications prévues. De plus, les assemblages peuvent être appliqués, de manière non exhaustive, à un élément d'une pièce d'horlogerie tel qu'une ancre, une roue d'échappement, un spiral, un balancier, un pont ou plus généralement un mobile.

Il est également possible d'utiliser l'assemblage divulgué ci-dessus en remplacement des moyens de déformation élastique 48 ou des cylindres 63, 66 du document WO 2009/115463 afin de fixer un résonateur du type balancier- spiral monobloc sur un axe de pivotement.

Bien entendu, deux organes tels que décrit ci-dessus peuvent également être assujettis sur le même axe à l'aide de deux assemblages distincts afin de solidariser leur mouvement respectif. On comprend alors que le même axe sera formé avec deux parties évasées radialement 7, 27, 27', 27", 27"' destinées à être déformées.

Enfin, les assemblages selon l'invention peuvent également permettre la solidarisation de tout type d'organe horloger ou non dont le corps est formé d'un matériau ne comportant pas de domaine plastique (silicium, quartz, etc.) avec un axe comme, par exemple, un résonateur du type diapason ou plus généralement un MEMS (acronyme provenant des termes anglais « Micro-Electro-Mechanical System »).

## Revendications

1. Procédé d'assemblage d'un organe (5, 15) en un premier matériau dans une pièce (3) en un deuxième matériau ne comprenant pas de domaine plastique, ledit procédé comportant les étapes suivantes :
a) former la pièce (3) avec une ouverture (4) ;
**caractérisé en ce que** le procédé comporte en outre les étapes suivantes :
b) introduire sans contrainte, dans l'ouverture (4), une partie évasée radialement (7, 27, 27', 27", 27"') de l'organe (5, 15) ;
c) déformer élastiquement et plastiquement la partie évasée (7, 27, 27', 27", 27"') dudit organe dans l'ouverture (4) par rapprochement axial de deux outils (11, 13, 21) respectivement au niveau des parties supérieure et inférieure de ladite partie évasée afin que ladite partie évasée exerce une contrainte radiale (B) contre la paroi de la pièce (3) entourant l'ouverture (4) en sollicitant la déformation élastique de la pièce (3) pour solidariser l'assemblage de manière non destructive pour ladite pièce.

2. Procédé selon la revendication précédente, **caractérisé en ce que** la paroi externe de la partie évasée (7, 27, 27', 27", 27"') dudit organe dans l'ouverture est sensiblement de forme correspondante à l'ouverture (4) de la pièce (3) afin d'exercer une contrainte radiale (B) sensiblement uniforme sur la paroi de la pièce (3) entourant l'ouverture (4).

3. Procédé selon la revendication 1 ou 2, **caractérisé en ce que** l'ouverture (4) de la pièce (3) est circulaire.

4. Procédé selon l'une des revendications précédentes, **caractérisé en ce que** la paroi de la pièce (3) entourant l'ouverture (4) comporte des cannelures (1) qui, lors de l'étape c), vont former des micro- rainures sur la surface externe de la partie évasée (7, 27, 27', 27", 27"') afin d'éviter les déplacements relatifs entre les éléments dudit assemblage.

5. Procédé selon la revendication 1 ou 2, **caractérisé en ce que** l'ouverture (4) de la pièce (3) est asymétrique afin d'éviter les déplacements relatifs entre les éléments dudit assemblage.

6. Procédé d'assemblage selon l'une des revendications précédentes, **caractérisé en ce que**, lors de l'étape b), la différence entre la section (e₁) de l'ouverture (4) et la section externe (e₃) de la partie évasée (7, 27, 27', 27", 27"') dudit organe dans l'ouverture (4) est d'environ 10 µm.

7. Procédé d'assemblage selon l'une des revendications précédentes, **caractérisé en ce que**, lors de l'étape c), la déformation exerce un serrage compris entre 8 et 20 µm.

8. Procédé d'assemblage selon l'une des revendications précédentes, **caractérisé en ce que**, lors des étapes b) et c), la partie évasée (7, 27, 27', 27", 27"') de l'organe (5, 15) dans l'ouverture (4) est maintenue dans l'ouverture (4) à l'aide d'un des deux outils (11, 13, 21).

9. Procédé d'assemblage selon l'une des revendications précédentes, **caractérisé en ce que**, lors de l'étape b), la partie évasée (7, 27, 27', 27", 27"') dudit organe dans l'ouverture (4) comporte un évidement (10, 30, 30', 30", 30"') conique afin, lors de l'étape c), de faciliter l'orientation radiale (B) de la contrainte induite par la déformation de ladite partie évasée.

10. Procédé d'assemblage selon l'une des revendications précédentes, **caractérisé en ce que** le deuxième matériau est formé à base de silicium.

11. Procédé d'assemblage selon l'une des revendications précédentes, **caractérisé en ce que** le premier matériau est formé à base de métal ou d'alliage métallique.

12. Procédé d'assemblage selon l'une des revendications précédentes, **caractérisé en ce que** la pièce (3) est un mobile d'horlogerie.

13. Procédé d'assemblage selon l'une des revendications 1 à 11, **caractérisé en ce que** la pièce (3) est une ancre d'horlogerie.

14. Procédé d'assemblage selon l'une des revendications 1 à 11, **caractérisé en ce que** la pièce (3) est un spiral d'horlogerie.

15. Procédé d'assemblage selon l'une des revendications 1 à 11, **caractérisé en ce que** la pièce (3) est un résonateur.

16. Procédé d'assemblage selon l'une des revendications 1 à 11, **caractérisé en ce que** la pièce (3) est un MEMS.

## Patentansprüche

1. Verfahren zum Montieren eines Organs (5, 15) aus einem ersten Material in einem Stück (3) aus einem zweiten Material ohne Kunststoffgebiet, wobei das Verfahren den folgenden Schritt umfasst:
a) Bilden des Stücks (3) mit einer Öffnung (4);
**dadurch gekennzeichnet, dass** das Verfahren außerdem die folgenden Schritte umfasst:
b) Einführen eines radial erweiterten Teils (7, 27, 27', 27", 27"') des Organs (5, 15) ohne Beanspruchung in die Öffnung (4);
c) elastisches und plastisches Verformen des erweiterten Teils (7, 27, 27', 27", 27"') des Organs in der Öffnung (4) durch axiales Annähern zweier Werkzeuge (11, 13, 21) auf Höhe des oberen bzw. des unteren Abschnitts des erweiterten Teils, damit der erweiterte Teil eine radiale Beanspruchung (B) gegen die Wand des Stücks (3), die die Öffnung (4) umgibt, ausübt, indem die elastische Verformung des Teils (3) erzwungen wird, um die Anordnung auf eine das Stück nicht zerstörende Weise zu befestigen.

2. Verfahren nach dem vorhergehenden Anspruch, **dadurch gekennzeichnet, dass** die Außenwand des erweiterten Teils (7, 27, 27', 27", 27"') des Organs in der Öffnung eine Form hat, die im Wesentlichen jener der Öffnungen (4) des Stücks (3) entspricht, um eine im Wesentlichen gleichmäßige radiale Beanspruchung (B) auf die Wand des Stücks (3), die die Öffnung (4) umgibt, auszuüben.

3. Verfahren nach Anspruch 1 oder 2, **dadurch gekennzeichnet, dass** die Öffnung (4) des Stücks (3) kreisförmig ist.

4. Verfahren nach einem der vorhergehenden Ansprüche, **dadurch gekennzeichnet, dass** die Wand des Stücks (3), die die Öffnung (4) umgibt, Rillen (1) aufweist, die im Schritt c) in der äußeren Oberfläche des erweiterten Teils (7, 27, 27', 27", 27"') Mikronuten bilden, um relative Verlagerungen zwischen den Elementen der Anordnung zu verhindern.

5. Verfahren nach Anspruch 1 oder 2, **dadurch gekennzeichnet, dass** die Öffnung (4) des Stücks (3) asymmetrisch ist, um relative Verlagerungen zwischen den Elementen der Anordnung zu vermeiden.

6. Montageverfahren nach einem der vorhergehenden Ansprüche, **dadurch gekennzeichnet, dass** im Schritt b) der Unterschied zwischen dem Querschnitt (e₁) der Öffnung (4) und dem äußeren Querschnitt (e₃) des erweiterten Teils (7, 27, 27', 27", 27"') des Organs in der Öffnung (4) etwa 10 µm beträgt.

7. Montageverfahren nach einem der vorhergehenden Ansprüche, **dadurch gekennzeichnet, dass** im Schritt c) die Verformung eine Klemmung im Bereich von 8 bis 20 µm ausübt.

8. Montageverfahren nach einem der vorhergehenden Ansprüche, **dadurch gekennzeichnet, dass** in den Schritten b) und c) der erweiterte Teil (7, 27, 27', 27", 27"') des Organs (5, 15) in der Öffnung (4) mit Hilfe eines der zwei Werkzeuge (11, 13, 21) gehalten wird.

9. Montageverfahren nach einem der vorhergehenden Ansprüche, **dadurch gekennzeichnet, dass** im Schritt b) der erweiterte Teil (7, 27, 27', 27", 27'") in der Öffnung (4) eine konische Aussparung (10, 30, 30', 30", 30"') umfasst, um im Schritt c) die radiale Orientierung (B) der durch die Verformung des erweiterten Teils eingeführten Beanspruchung zu unterstützen.

10. Montageverfahren nach einem der vorhergehenden Ansprüche, **dadurch gekennzeichnet, dass** das zweite Material auf Siliciumbasis gebildet ist.

11. Montageverfahren nach einem der vorhergehenden Ansprüche, **dadurch gekennzeichnet, dass** das erste Material auf Metall- oder Metalllegierungsbasis gebildet ist.

12. Montageverfahren nach einem der vorhergehenden Ansprüche, **dadurch gekennzeichnet, dass** das Stück (3) ein bewegliches Element eines Zeitmessgeräts ist.

13. Montageverfahren nach einem der Ansprüche 1 bis 11, **dadurch gekennzeichnet, dass** das Stück (3) ein Zeitmessgerät-Anker ist.

14. Montageverfahren nach einem der Ansprüche 1 bis 11, **dadurch gekennzeichnet, dass** das Stück (3) eine Zeitmessgerät-Spirale ist.

15. Montageverfahren nach einem der Ansprüche 1 bis 11, **dadurch gekennzeichnet, dass** das Stück (3) ein Resonator ist.

16. Montageverfahren nach einem der Ansprüche 1 bis 11, **dadurch gekennzeichnet, dass** das Stück (3) ein MEMS ist.

## Claims

1. Method of assembling a member (5, 15) made of a first material in a part (3) made of a second material having no plastic domain, said method including the following steps:
a) forming the part (3) with an aperture (4);
**characterized in that** the method further comprises the following steps:
b) inserting a radially flared portion (7, 27, 27', 27", 27"') of the member (5, 15) into the aperture (4), without any stress;
c) elastically and plastically deforming the flared portion (7, 27, 27', 27", 27"') of said member in the aperture (4) by moving two tools (11, 13, 21) towards each other axially, respectively on the top and bottom parts of said flared portion, so as said flared portion exerts a radial stress (B) against the wall of the part (3) surrounding the aperture (4), causing the elastic deformation of the part (3), to secure the assembly in a manner that is not destructive for said part.

2. Method according to the preceding claim, **characterized in that** the shape of the external wall of the flared portion (7, 27, 27', 27", 27"') substantially matches the aperture (4) of the part (3), so as to exert a substantially uniform radial stress (B) on the wall of the part (3) surrounding the aperture (4).

3. Method according to claim 1 or 2, **characterized in that** the aperture (4) of the part (3) is circular.

4. Method according to any of the preceding claims, **characterized in that** the wall of the part (3) surrounding the aperture (4) includes flutes (1) which, in step c), will form micro-grooves on the external surface of the flared portion (7, 27, 27', 27", 27"') to prevent any relative movements between the elements of said assembly.

5. Method according to claim 1 or 2, **characterized in that** the aperture (4) of the part (3) is asymmetrical to prevent any relative movements between the elements of said assembly.

6. Assembly method according to any of the preceding claims, **characterized in that**, in step b), the difference between the section (e₁) of the aperture (4) and the external section (e₃) of the flared portion (7, 27, 27', 27", 27"') of said member in the aperture (4) is approximately 10 µm.

7. Assembly method according to any of the preceding claims, **characterized in that**, in step c), the deformation exerts a clamping force generating a displacement comprised between 8 et 20 µm.

8. Assembly method according to any of the preceding claims, **characterized in that**, in steps b) and c), the flared portion (7, 27, 27', 27", 27"') of the member (5, 15) in the aperture (4) is held in the aperture (4) by using one of the two tools (11, 13, 21).

9. Assembly method according to any of the preceding claims, **characterized in that**, in step b), the flared portion (7, 27, 27', 27", 27'") of said member in the aperture (4) includes a conical recess (10, 30, 30', 30", 30'") in order, in step c), to facilitate the radial orientation (B) of the stress caused by the deformation of said flared portion.

10. Assembly method according to any of the preceding claims, **characterized in that** the second material is silicon based.

11. Assembly method according to any of the preceding claims, **characterized in that** the first material is formed from a metal or metal alloy base.

12. Assembly method according to any of the preceding claims, **characterized in that** the part (3) is a timepiece wheel set.

13. Assembly method according to any of claims 1 to 11, **characterized in that** the part (3) is timepiece pallets.

14. Assembly method according to any of claims 1 to 11, **characterized in that** the part (3) is a timepiece balance spring.

15. Assembly method according to any of claims 1 to 11, **characterized in that** the part (3) is a resonator.

16. Assembly method according to any of claims 1 to 11, **characterized in that** the part (3) is a MEMS.
